# EUROPÄISCHE PATENTSCHRIFT

(11) **EP 0 848 253 B1**
(45) Veröffentlichungstag und Bekanntmachung des Hinweises auf die Patenterteilung: **14.11.2001**
(21) Anmeldenummer: 97121112.3
(22) Anmeldetag: 02.12.1997
(51) Int. Cl.: G01N 27/64

(54) **Ionen-Mobilitäts-Spektrometer**
Ion mobility spectrometer
Spectromètre à mobilité d'ions

(30) Priorität: 05.12.1996 DE 19650419
(43) Veröffentlichungstag der Anmeldung: 17.06.1998
(73) Patentinhaber: EADS Deutschland GmbH, 81663 München (DE)
(72) Erfinder: Breit, Ulrich, 81735 München (DE); Göbel, Johann, 81547 München (DE)

(56) Entgegenhaltungen:
- US-A- 3 748 492
- US-A- 4 362 941
- US-A- 4 390 784
- US-A- 4 654 769
- US-A- 5 179 289

## Beschreibung

Die vorliegende Erfindung betrifft ein lonen-Mobilitäts-Spektrometer (IMS) mit einer lonisierungskammer, mit einer Driftkammer, mit einem in der Driftkammer angeordneten lonenkollektor und mit einer Anordnung in der Driftkammer zur Erzeugung eines elektrischen Feldes, die potenzialführende Leiter aufweist, die mit einer Hochspannungsquelle in Verbindung steht.

Zum Betrieb eines lonen-Mobilitäts-Spektrometers (IMS) ist eine Hochspannung erforderlich, die in der Driftkammer das erforderliche elektrische Feld und üblicherweise 300 V/cm erzeugt, wobei diese Hochspannung im Bereich von über 1000 V liegt. Dabei fällt das Potenzial üblicherweise über einen oder mehrere Widerstände ab; die Potenzialsteuerung kann durch eine Widerstandsschicht oder potenzialführende, über Widerstände miteinander verbundene, Leiter bewirkt werden.

Ein typisches lonen-Mobilitäts-Spektrometer weist neben der lonisierungskammer und der Driftkammer sowie dem lonenkollektor ein gitterförmiges Tor zwischen lonisierungs- und Driftkammer auf, wobei die Ionen in der Driftkammer durch den Einfluß des elektrischen Feldes zum lonenkollektor wandern. Die Driftzeit ist für verschiedene Ionen unterschiedlich groß und wird von deren Beweglichkeit in der Gasatmosphäre der Driftkammer bestimmt.

Das Feld kann dabei durch äquidistante Metallringe gebildet werden, die durch Isolationsringe voneinander getrennt sind und über Widerstände miteinander in elektrischem Kontakt stehen. Das eine Ende dieser Anordnung wird an einer Hochspannungsquelle angeschlossen, die üblicherweise im kV-Bereich liegt, während das andere Ende auf Erde gelegt wird.

Es ist üblich, dass die Hochspannungsquelle die Spannung kontinuierlich zur Verfügung stellt. Der über die Widerstände fließende Strom hat einen erheblichen Leistungsbedarf zur Folge. Die benötigte Leistung liegt dabei im Bereich von 10 Watt, wobei die Größe der Hochspannungserzeuger nach diesem Stand der Technik einer Miniaturisierung eines IMS im Wege steht.

Ein weiterer Nachteil ist darin zu sehen, dass die Hochspannungsschaltung während der Messung aktiv ist, d.h. dass Störungen bei der Messung des lonenstroms, der im Bereich von 10⁻¹² A liegt, durch umfangreiche Abschirmungen verhindert werden müssen.

Aus der US-A-4,362,941 ist ein lonen-Mobilitäts-Spektrometer bekannt geworden, welches eine lonisierungskammer, eine Driftkammer, einen in der Driftkammer angeordneten lonenkollektor und eine Anordnung in der Driftkammer zur Erzeugung eines elektrischen Feldes, die mit einer Hochspannungsquelle in Verbindung steht, erhält. Ein Hinweis auf die Möglichkeit einer Zwischenspeicherung der Hochspannung wird jedoch nicht gegeben.

Ein weiteres IMS ist in der US-A-4,777,363 beschrieben. Die Driftkammer ist dabei mit einer Vielzahl von metallischen, zylindrischen Ringen ausgestattet, die durch eine Vielzahl von parallel geschalteten Widerständen mit der entsprechenden Driftspannung beaufschlagt werden und die durch geeignete Isolatoren elektrisch voneinander getrennt sind.

Schließlich beschreibt die US-A-5,179,289 eine kaskadenartig aufgebaute Kondensatorbank, bei der die Kondensatoren parallel geschaltet aufgeladen und anschließend zur Bereitstellung der Hochspannung in Serie geschaltet werden. Die Anwendung dieses DC-DC-Spannungsvervielfachers auf ein IMS wird jedoch nicht angeregt.

Aufgabe der vorliegenden Erfindung ist es, ein lonen-Mobilitäts-Spektrometer zu schaffen, bei dem der elektrische Leistungsbedarf während der Hochspannungserzeugung erheblich reduziert ist und bei dem das Hochspannungsteil selber erheblich verkleinert ist und Störungen vermindert.

Ausgehend von einem lonen-Mobilitäts-Spektrometer der eingangs näher genannten Art erfolgt die Lösung dieser Aufgabe mit den im kennzeichnenden Teil des Anspruchs 1 angegebenen Merkmalen; eine vorteilhafte Ausgestaltung ist im Unteranspruch 2 wiedergegeben.

Erfindungsgemäß wird also vorgeschlagen, dass die Anordnung zur Erzeugung eines elektrischen Feldes mehrere Kondensatoren aufweist, die jeweils in Gruppen von zumindest einem Kondensator aufgeteilt und die Gruppen mit einer Schaltung derart verbunden sind, dass sie zur Aufladung parallel zueinander und zur Hochspannungserzeugung nach der Aufladung in Reihe geschaltet sind, wobei die potenzialführenden Leiter so über die Schaltung mit den Gruppen von Kondensatoren verbunden sind, dass die Spannungsdifferenz zwischen zwei benachbarten Leitern durch die Spannung der sie verbindenden Kondensatoren erzeugt wird.

In diesem Fall können die Widerstände zwischen den potenzialführenden Leitern vollständig entfallen, wobei sich der elektrische Leistungsbedarf der Anordnung auf das Aufladen der Kondensatoren beschränkt; während des Betriebs des IMS wird keine Leistung verbraucht.

Mit der erfindungsgemäßen Art der Hochspannungserzeugung kann der elektrische Leistungsbedarf erheblich gesenkt werden, wobei gleichzeitig die Größe des Hochspannungsteils minimiert wird. Die Hochspannung wird dabei ausschließlich durch eine Gleichspannung erzeugt, so dass als Spannungsquelle eine Batterie verwendbar ist. Damit wird eine Miniaturisierung des IMS ermöglicht.

Während der Messung selbst fließen in der Hochspannungsversorgung keinerlei Ströme, so dass die bisher üblichen Abschirmungsmaßnahmen vollständig entfallen können.

Im folgenden wir die Erfindung anhand der Zeichnung näher erläutert, in der schematisch die beiden Schaltmöglichkeiten für die Kondensatoren zur Erzeugung der Hochspannung in der Driftkammer dargestellt sind.

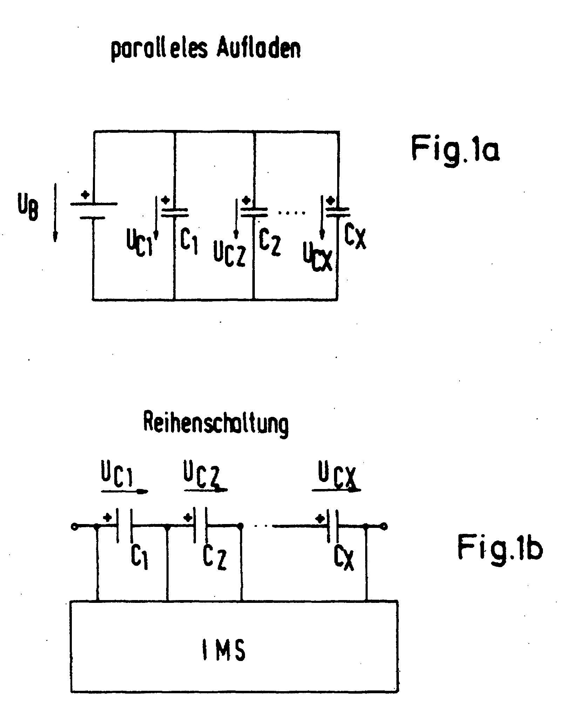

Fig. la zeigt dabei die Parallelanordnung einiger Kondensatoren C₁, C₂... Cₓ, die mit einer Batteriespannung U_{B} beaufschlagt werden, wobei den einzelnen Kondensatoren die Spannungswerte U_{C1}, U_{C2}... U_{CX} erteilt werden; nachdem die C₁, C₂... Cₓ in Parallelschaltung aufgeladen wurden, werden sie durch eine geeignete (nicht dargestellte) Schaltung in Reihe geschaltet (Figur 1b) und mit den potenzialführenden Leitern der Driftkammer verbunden.

Erfindungsgemäß ist also das lonen-Mobilitäts-Spektrometer (IMS) mit einer Hochspannungsversorgung versehen, die aus einer Vielzahl von Kondensatoren besteht, die zur Aufladung in Parallelschaltung angeordnet sind und die zur Hochspannungserzeugung in Reihe geschaltet sind.

Bei einer Felderzeugung mit potenzialführenden Leitern verbinden die Kondensatoren diese Leiter, wobei die Spannungsdifferenz zwischen zwei benachbarten Leitern durch die Spannung der sie verbindenden Kondensatoren erzeugt wird.

## Patentansprüche

1. Ionen-Mobilitäts-Spektrometer, mit einer lonisierungskammer, mit einer Driftkammer, mit einem in der Driftkammer angeordneten lonenkollektor und mit einer Anordnung in der Driftkammer zur Erzeugung eines elektrischen Feldes, die potenzialführende Leiter aufweist, die mit einer Hochspannungsquelle in Verbindung steht, **dadurch gekennzeichnet, dass** die Hochspannungsquelle mehrere Kondensatoren aufweist, die jeweils in Gruppen von zumindest einem Kondensator aufgeteilt und die Gruppen mit einer Schaltung derart verbunden sind, dass sie zur Aufladung parallel zueinander und zur Hochspannungserzeugung nach der Aufladung in Reihe geschaltet sind, wobei die potenzialführenden Leiter so über die Schaltung mit den Gruppen von Kondensatoren verbunden sind, dass die Spannungsdifferenz zwischen zwei benachbarten Leitern durch die Spannung der sie verbindenden Kondensatoren erzeugt wird.

2. lonen-Mobilitäts-Spektrometer nach Anspruch 1, **dadurch gekennzeichnet, dass** die Hochspannungsquelle eine Batterie aufweist.

## Claims

1. An ion mobility spectrometer, comprising an ionisation chamber, a drift chamber, an ion collector arranged therein and an arrangement in the drift chamber for generating an electrical field, the arrangement having voltage-carrying conductors connected to a high-voltage source, **characterised in that** the high-voltage source has a plurality of capacitors divided into groups of at least one capacitor, and the groups are connected to a circuit in such a way that they are connected in parallel for charging and in series for high-voltage generation after charging, the voltage-carrying conductors being connected to the groups of capacitors via the circuit in such a way that the voltage difference between two adjacent conductors is generated by the voltage of the capacitors connecting them.

2. An ion mobility spectrometer according to claim 1, **characterised in that** the high-voltage source has a battery.

## Revendications

1. Spectromètre à mobilité d'ions, comprenant une chambre d'ionisation, une chambre de dérive, un collecteur d'ions agencé dans la chambre de dérive, et un agencement dans la chambre de dérive pour engendrer un champ électrique, qui comprend des lignes conductrices de potentiel et qui est en liaison avec une source de haute tension, **caractérisé en ce que** la source de haute tension comprend plusieurs condensateurs, lesquels sont répartis respectivement en groupes comprenant au moins un condensateur, et les groupes sont reliés à un circuit de telle manière qu'ils sont branchés pour la charge parallèlement les uns aux autres et qu'ils sont branchés en série après la charge pour la génération d'une haute tension, lesdites lignes conductrices de potentiel étant reliées par l'intermédiaire du circuit aux groupes de condensateurs de telle manière que la différence de tension entre deux lignes voisines est engendrée par la tension des condensateurs qui les relient.

2. Spectromètre de mobilité d'ions selon la revendication 1, **caractérisé en ce que** la source à haute tension comprend une batterie.
